# FASCICULE DE BREVET EUROPEEN

(11) **EP 0 754 166 B1**
(45) Date de publication et mention de la délivrance du brevet: **24.02.1999**
(21) Numéro de dépôt: 95902170.0
(22) Date de dépôt: 24.11.1994
(51) Int. Cl.: C02F 1/465, C02F 1/78, C02F 1/72

(54) **INVENTION POUR UNE INSTALLATION D'EPURATION DES EAUX USEES**
VERFAHREN UND VORRICHTUNG FÜR EINE ABWASSERREINIGUNGSANLAGE
METHOD FOR A WASTE WATER TREATMENT PLANT

(30) Priorité: 26.11.1993 FR 9314358
(43) Date de publication de la demande: 22.01.1997
(73) Titulaire: Deheurles, Alain, 25200 Montbéliard (FR)
(72) Inventeur: BEAUJEAN, Holger, D-76297 Stutensee (DE)
(74) Mandataire: Ropital-Bonvarlet, Claude
(86) Numéro de dépôt international: FR9401368
(87) Numéro de publication internationale: WO9515295

(56) Documents cités:
- EP-A- 0 061 632
- FR-A- 1 556 002
- US-A- 3 635 764
- US-A- 3 793 173

## Description

Les procédés habituels d'électroflottation ou d'électrofloculation sont connus. Ils sont basés sur la formation et la précipitation d'hydroxydes ferreux et d'hydroxydes d'aluminium.
Ceux-ci se forment dans un champ de courant continu si le pH est adéquat, ou sont rendus en tant qu'électrolytes dans la solution.

Les effets secondaires tels que le dégagement d'oxygène ou d'hydrogène naissant augmentent l'oxydation et/ou la réduction des matières organiques dans l'eau.

Les procédés d'électroflottation ou d'électrofloculation étaient jusqu'à maintenant inutilisables en cas de concentration de boue importante En effet, avec ces procédés, il se produit une sédimentation rapide de la boue accompagnée de dépôt et d'engorgement, particulièrement en cas de disposition en méandre des électrodes. En outre, il n'était pas toujours possible de respecter les valeurs limites (valeur D.C.O.) pour les résidus organiques.

Le but de cette invention est d'améliorer les procédés déjà connus d'électroflottation et d'électrofloculation de telle manière que le retraitement d' eaux usées très troubles, la réduction franche de la valeur D.C.O. et la récupération de matières valables à partir des eaux usées soient possibles

D'après notre expérience, l'eau est mélangée à l'air comprimé, dirigée vers le bas sur des paquets d'électrodes constituées de fer, d'aluminium ou de graphite. L'eau circule ainsi de bas en haut entre les électrodes disposées parallèlement et verticalement. Au cours de ce processus, se produit la formation d'hydroxydes ferreux et d'hydroxydes d'aluminium.

L'air comprimé qui arrive avec les eaux usées a plusieurs fonctions :
1- Améliorer l'oxydation des matières organiques
2- Améliorer la flottation des matières solides qui surnagent
3 - Remuer fortement la boue qui est introduite dans l'eau, de telle sorte qu'il se produise un mélange entre la boue et les hydroxydes ferreux et les hydroxydes d'aluminium, ceux-ci flottant également.
   S'il y a des matières organiques extrêmement difficiles à oxyder, on peut ajouter un mélange d'air comprimé, ozone et peroxyde d'hydrogène dans une proportion variable
4 - réoxydation des ions de Fe²⁺ en ions Fe³⁺, ions qui peuvent se former, et sédimentation de ceux ci en Fe(OH)₃.
   Grâce au procédé de cette invention et au dispositif nécessaire, l'utilisation des procédés d'électroflottation déjà connus est nettement amplifié, et certaines eaux jusqu'à maintenant impossibles à traiter le deviennent.

L'avantage de cette invention, c'est qu'il est désormais inutile d'ajouter des substances chimiques aux eaux usées à l'exception des ions d'aluminium et des ions de Fer eux mêmes insolubles. Cela est valable aussi bien pour la précipitation et la sédimentation des métaux lourds, la séparation de la boue qui se trouve dans l'eau ou qui est ajoutée que pour les composants organiques.

De ce fait, l'eau clarifiée qui en résulte est parfaitement exploitable pour le recyclage. S'il est parfois nécessaire d'ajouter de l'ozone ou du peroxyde d'hydrogène, il n'y a pas d'apport d'ions étrangers

Les illustrations suivantes décrivent le procédé ainsi que le dispositif nécessaire :

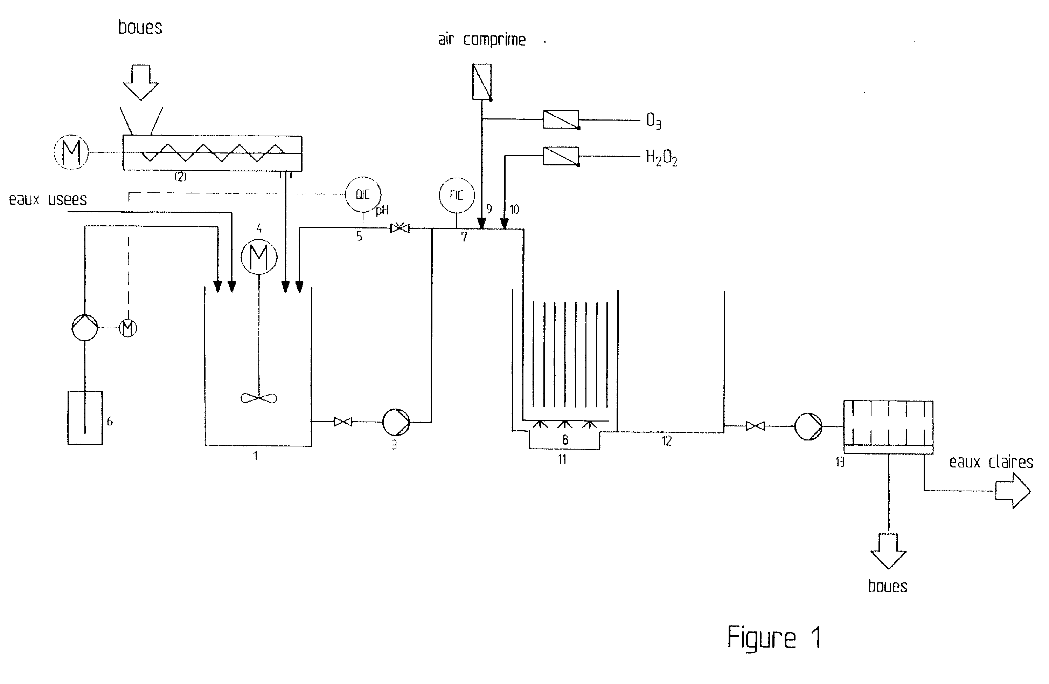

La figure 1 montre la constitution schématique d'une installation pour la mise en oeuvre de ce procédé pour une quantité d'eau d'environ 0,5 à 100 m³/h.

Les eaux usées arrivent dans un réservoir collecteur (1) dans lequel 5 à 10 % de boue (sèche, à teneur acqueuse ou huileuse) va être ajoutée au moyen d'une transporteuse à vis (2). Une pompe en circuit fermé (3) aidée d'un agitateur (4) remue fortement le mélange eau-boue. Le pH mesuré (5) est dosé (6) en permanence, va être ajusté entre 3 et 10, valeurs requises pour ce procédé.

Un courant partiel correspondant approximativement à la quantité d'eau parvient au tube mélangeur (8) à travers un système de mesure (7). Le tube mélangeur situé au fond du réacteur (11) est équipé de buses. On va injecter dans ce tube mélangeur soit de l'air comprimé en très fines particules à une pression allant de 2 à 6 bars, soit du peroxyde d'hydrogène. L'air comprimé peut également être enrichi d'ozone

Le mélange eau-boue circule lentement à travers les plaques électrodes en formation parallèles, pendant une durée de 6 à 60 mn.

Après le passage dans le réacteur, l'eau mélangée à la boue et aux flocons s'écoule dans le réservoir tampon (12).

Elle est ensuite guidée à travers un filtre presse (13) ou bien une unité de décantation vers le traitement final, c'est à dire la séparation de la boue.

L'eau purifiée peut ainsi être évacuée, la boue sèche sera déposée ou recyclée grâce à un autre procédé.

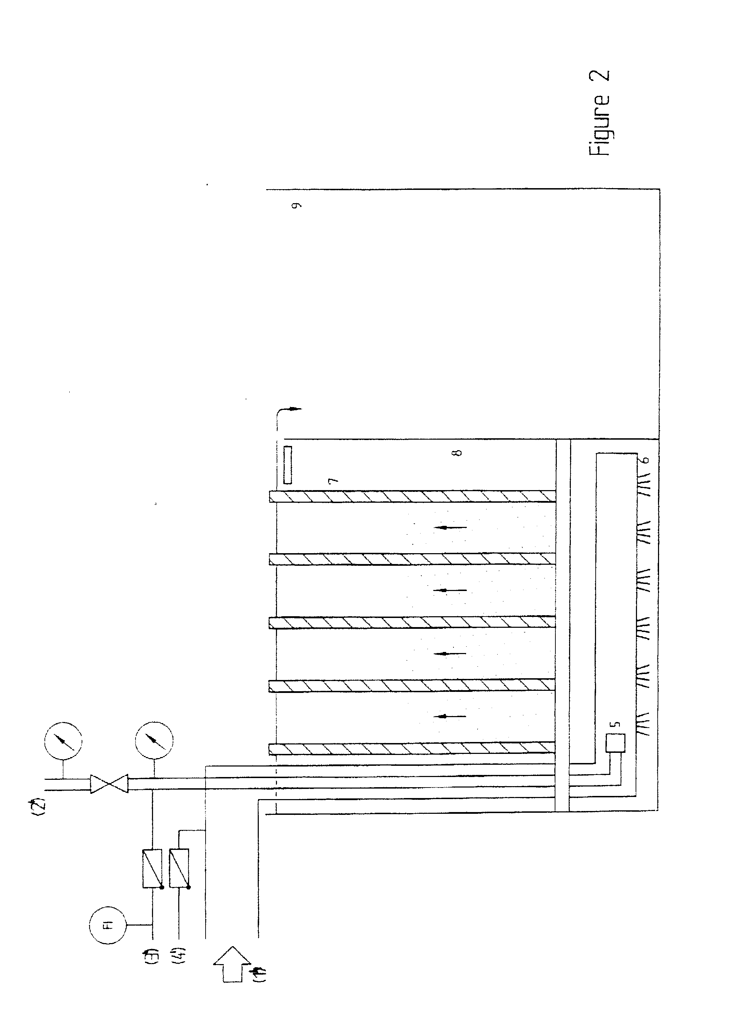

La figure 2 représente la constitution du réacteur

Les eaux usées mélangées à la boue arrivent dans le réacteur par le tuyau principal d'alimentation (1'). Ce tuyau possède dans sa partie inférieure des ouvertures de vidange (6) qui correspondent chacune à un groupe d'électrodes (7).

Dans le tuyau d'alimentation se trouve une buse (5) pour l'injection d'air comprimé (2') éventuellement mélangé à de l'ozone (3').

Dans sa partie supérieure se trouve également un dosage de H₂O₂ (4')

Ce dispositif est installé de telle sorte que dans le réacteur (8), l'eau clarifiée y compris la boue et les flocons s'écoulent dans le réservoir tampon (10) par le déversoir (9).

## Revendications

1. Procédé pour l'épuration des eaux sales et d'origine industrielle de même que les mélanges eaux/boues par l'utilisation du principe connu de l'électroflottation et l'électrofloculation par l'utilisation d'électrodes de fer, d'aluminium ou de graphite, caractérisé en ce que le mélange eaux/boues, dont le pH est ajusté en permanence entre 3 et 10, est d'abord additionné d'air comprimé éventuellement enrichi d'ozone ou mélangé si nécessaire avec du peroxyde d'hydrogène, puis tourbillonne de bas en haut au travers de paquets d'électrodes installées à la verticale et s'évacue par débordement au dessus d'un déversoir.

2. Procédé selon la revendication 1, caractérisé en ce qu'il est utilisé dans une installation fixe.

3. Procédé selon la revendication 1, caractérisé en ce qu'il est utilisé dans une installation mobile.

4. Dispositif de mise en oeuvre du procédé selon l'une quelconque des revendications 1 à 3, comprenant un réacteur muni d'électrodes de fer, d'aluminium ou de graphite, disposées de manière verticale et parallèle, caractérisé en ce qu'il comprend des moyens de mesure et d'ajustement du pH, un tuvau d'alimentation, équipé d'une buse pour l'injection d'air comprimé éventuellement mélangé à l'ozone, monté en dessous des électrodes et un déversoir reliant le réacteur à un bassin tampon.

5. Dispositif selon la revendication 4, caractérisé par le fait que tous les agrégats principaux et secondaires nécessaires pour le procédé selon l'une quelconque des revendications 1 à 3, sont assemblés en unité fixe ou mobile et transportable.

## Patentansprüche

1. Verfahren zur Reinigung salzhaltiger Wässer industriellen Ursprungs sowie von Wasser/Schlamm-Gemischen unter Verwendung des bekannten Prinzips der Elektroflotation und der Elektroflockung unter Verwendung von Eisen-, Aluminium- oder Graphitelektroden,
dadurch gekennzeichnet, daß
das Wasser/Schlamm-Gemisch, dessen pH-Wert ständig auf 3 bis 10 eingestellt wird, zunächst mit komprimierter, gegebenenfalls mit Ozon angereicherter Luft versetzt oder erforderlichenfalls mit Wasserstoffperoxid vermischt wird, anschließend von unten nach oben durch Elektrodenpakete, die vertikal montiert sind, gewirbelt wird und durch Überlaufen über eine Überlaufvorrichtung abfließt.

2. Verfahren nach Anspruch 1, dadurch gekennzeichnet, daß es in einer stationären Vorrichtung durchgeführt wird.

3. Verfahren nach Anspruch 1, dadurch gekennzeichnet, daß es in einer mobilen Vorrichtung durchgeführt wird.

4. Vorrichtung zur Durchführung des Verfahrens nach einem der Ansprüche 1 bis 3, die einen Reaktor umfaßt, der mit Eisen-, Aluminium- oder Graphitelektroden ausgerüstet ist, die vertikal und parallel angeordnet sind,
dadurch gekennzeichnet, daß
sie Mittel zur Messung und Einstellung des pH-Werts, ein Zuleitungsrohr, das mit einer Düse zum Einblasen von komprimierter Luft, die gegebenenfalls mit Ozon vermischt ist, ausgestattet ist, das unterhalb der Elektroden montiert ist, und eine Überlaufvorrichtung umfaßt, die den Reaktor mit einem Pufferbecken verbindet.

5. Vorrichtung nach Anspruch 4, dadurch gekennzeichnet, daß alle für das Verfahren nach einem der Ansprüche 1 bis 3 erforderlichen Haupt- und Nebenaggregate in einer stationären Einheit oder einer mobilen Einheit montiert sind.

## Claims

1. Method for treating waste water of industrial origin as well as water/mud mixtures by using the known principle of electro-flotation and electro-flocculation by the use of iron, aluminium or graphite electrodes, characterized in that the water/mud mixture, whose pH is permanently adjusted between 3 and 10, firstly has compressed air, possibly enriched with ozone or if necessary mixed with hydrogen peroxide, added thereto, then eddies upwardly through packets of vertically installed electrodes and evacuates by overflow over an overfall.

2. Method according to Claim 1, characterized in that it is used in a fixed installation.

3. Method according to Claim 1, characterized in that it is used in a mobile installation.

4. Device for carrying out the method according to any one of Claims 1 to 3, comprising a reactor provided with iron, aluminium or graphite electrodes, disposed vertically and parallel, characterized in that it comprises means for measuring and adjusting the pH, a supply pipe equipped with a nozzle for injecting compressed air possibly mixed with ozone, mounted below the electrodes and an overflow connecting the reactor to a buffer tank.

5. Device according to Claim 4, characterized in that all the principal and secondary aggregates necessary for the method according to any one of Claims 1 to 3, are assembled in a unit which is fixed or mobile and transportable.
